# EUROPÄISCHE PATENTSCHRIFT

(11) **EP 4 302 036 B1**
(45) Veröffentlichungstag und Bekanntmachung des Hinweises auf die Patenterteilung: **26.06.2024**
(21) Anmeldenummer: 22711213.3
(22) Anmeldetag: 07.03.2022
(51) Int. Cl.: F27B 7/16

(54) **DREHROHROFEN UND VERFAHREN ZUM BRENNEN VON KARBONATHALTIGEM GUT, INSBESONDERE KALKSTEIN ODER DOLOMIT**
ROTARY KILN AND METHOD FOR FIRING CARBONACEOUS MATERIAL, IN PARTICULAR LIMESTONE OR DOLOMITE
FOUR ROTATIF ET PROCÉDÉ DE CUISSON DU PRODUIT CONTENANT DES CARBONATES, EN PARTICULIER CALCAIRE OU DOLOMITE

(30) Priorität: 05.03.2021 EP 21161138
(43) Veröffentlichungstag der Anmeldung: 10.01.2024
(73) Patentinhaber: Lhoist Recherche et Développement S.A., 1342 Ottignies-Louvain-la-Neuve (BE)
(72) Erfinder: KACZINSKI, Carsten, 44319 Dortmund (DE)
(74) Vertreter: Cohausz & Florack
(86) Internationale Anmeldenummer: PCT/EP2022/055694
(87) Internationale Veröffentlichungsnummer: WO 2022/184935

(56) Entgegenhaltungen:
- DE-C- 400 236
- FR-A- 443 783
- US-A- 1 544 504
- US-A- 3 124 338

## Beschreibung

Die Erfindung betrifft einen Drehrohrofen zum Brennen von karbonathaltigem Gut, insbesondere Kalkstein oder Dolomit, umfassend ein Drehrohr mit einem Einlaufende zur Aufgabe des zu brennenden Gutes und einem Auslaufende zur Ausleitung des gebranntes Gutes, und eine im Bereich des Auslaufendes angeordnete Brennereinheit, wobei das Drehrohr an seinem Einlaufende eine Einlaufzone aufweist und an seinem Auslaufende eine Auslaufzone aufweist, wobei zwischen der Einlaufzone und Auslaufzone in Transportrichtung des Gutes eine Vorwärmzone und eine Brennzone angeordnet sind. Ferner betrifft die vorliegende Erfindung ein Verfahren zum Brennen von karbonathaltigem Gut, insbesondere Kalkstein und Dolomit, in einem solchen Drehrohrofen.

Drehrohröfen zum Brennen von karbonathaltigem Gut sind aus dem Stand der Technik seit Jahrzehnten bekannt und haben sich als effizient und zuverlässig arbeitender Ofentyp zum kontinuierlichen Kalzinieren verschiedener Arten von Materialien bewährt. Druckschriftlicher Stand der Technik findet sich beispielsweise in der FR 443 783 A, in der EP 0 004 756 A2 oder der US 5,873,714. Zentraler Bestandteil eines Drehrohrofens ist ein langes zylindrisches Drehrohr (oftmals 100 m oder länger), welches typischerweise mit etwa 2 bis 7% zur Horizontalen geneigt ist. Das Drehrohr dreht sich langsam mit 0,5 bis 1,5 U/min um seine Achse und das in das Drehrohr an dessen Einlaufende mittels Förderschnecke o.ä. eingebrachte zu brennende Gut bewegt sich schwerkraftbedingt langsam durch das Drehrohr in Richtung einer im durch einen im Bereich des Ofenauslaufs angeordneten Brenner erzeugten Flamme. Dabei wandert das zu brennende Gut von der wenige Meter langen Einlaufzone in die Vorwärmzone (teilweise auch als Übergangszone bezeichnet), in der bereits Temperaturen von ca. 1100 - 1200 °C vorliegen, und von dort in eine ausgedehnte Brennzone mit maximalen Temperaturen von 1500 - 1600°C. Hier findet dementsprechend zu einem ganz überwiegenden Teil die eigentliche Kalzinierung des zu brennenden Gutes statt. An die Brennzone schließt sich wiederum die nur wenige Meter lange Auslaufzone des Drehrohrs an, von wo das dann gebrannte Gut in der Regel durch einen Schacht auf eine Kühleinheit fällt. Üblicherweise ist der Ofen bis zu etwa 8 bis 20% des Ofendurchmessers mit dem zu brennenden Gut gefüllt.

Im Sinne eines effizienten Ofenbetriebs werden stets hohe Durchsatzraten angestrebt, wobei gleichzeitig sicherzustellen ist, dass die Kalzinierung des zu brennenden Gutes vollständig ist und dass das gesamte Kohlendioxid aus dem Material entfernt wird. Für eine schnelle und vollständige Kalzinierung ist dabei eine gründliche Durchmischung des zu brennenden Gutes von entscheidender Bedeutung.

Ein weiteres Problem im praktischen Betrieb stellt die Staubentwicklung dar. Diese führt einerseits zu Materialverlust und andererseits zu einer Freisetzung von Stäuben in die Umwelt, was aus ökologischen Gründen nachteilig ist und zudem konzentrationsabhängig eine Gesundheitsgefährdung darstellen kann.

Es ist daher Aufgabe der vorliegenden Erfindung, einen Drehrohrofen zum Brennen von karbonathaltigem Gut, insbesondere von Kalkstein oder Dolomit, der eingangsgenannten Art anzugeben, welcher einen hohen Materialdurchsatz und dabei eine möglichst vollständige Kalzinierung des zu brennenden Gutes sicherstellt. Ferner wird im Ofenbetrieb eine signifikante Reduzierung der Staubentwicklung angestrebt.

Nach einem ersten Aspekt der vorliegenden Erfindung wird die vorstehend genannte Aufgabe mit einem Drehrohrofen nach dem Oberbegriff des Anspruchs 1 dadurch gelöst, dass in der Vorwärmzone des Drehrohrs eine Mehrzahl von Vorsprüngen angeordnet ist, wobei die Vorsprünge als Gruppen im Wesentlichen parallel zur Längsachse des Drehrohrs hintereinander angeordnet sind, wobei in Umfangsrichtung des Drehrohrs benachbart angeordnete Vorsprünge benachbarter Gruppen von Vorsprüngen in Längsrichtung des Drehrohrs versetzt zueinander angeordnet sind, derart, dass in der Vorwärmzone spiralförmige Transportpfade für das zu brennende Gut gebildet sind.

Der erfindungsgemäße Drehrohrofen zeichnet sich durch einen zuverlässigen Betrieb bei hohem, gleichmäßigem Materialdurchsatz aus. Insbesondere durch das Vorsehen einer Mehrzahl von Vorsprüngen - fachsprachlich auch "Mitnehmer" genannt -, die erfindungsgemäß als Gruppen im Wesentlichen parallel zur Längsachse des Drehrohrs hintereinander angeordnet sind, ergibt sich eine stark verbesserte Durchmischung des zu brennenden Gutes und damit eine schnellere Kalzinierung in gleichen Zeitintervallen, da infolge der gründlichen Durchmischung nicht nur das oberflächlich liegende Gut im Gutbett hohen Kalzinierungstemperaturen ausgesetzt ist.

Durch die erfindungsgemäß vorgesehene versetzte Anordnung von in Umfangsrichtung des Drehrohrs benachbart angeordneten Vorsprüngen, wobei die Vorsprünge jeweils zu benachbarten Gruppen von Vorsprüngen gehören, werden spiralförmige Transportpfade für das zu brennende Gut gebildet. Dadurch wird ein vergleichsweise schneller Transport des zu brennenden Gutes durch das Drehrohr ermöglicht, was in Kombination mit der verbesserten Durchmischung des Gutes insgesamt zu einem höheren Ofendurchsatz führt und somit die Effizienz des Brennverfahrens steigert.

Aufgrund der bereits in der Vorwärmzone herrschenden sehr hohen Temperaturen ist nach einer ersten vorteilhaften Ausgestaltung der Erfindung bevorzugt, dass zumindest einige der Vorsprünge, bevorzugt alle, jeweils ein feuerfestes Material enthalten. Hierbei kann es sich um verschiedene hoch temperaturbeständige Materialien handeln. Als besonders geeignet erweist sich Beton, insbesondere Feuerbeton, wie aus dem Stand der Technik an sich bekannt.

Für die erfindungsgemäß in der Vorwärmzone vorgesehenen Vorsprünge haben sich in Versuchen der Anmelderin verschiedene Geometrien als geeignet herausgestellt. Bevorzugt werden prismatische Geometrien, insbesondere in Form eines Trapezprismas, speziell eines gleichschenkligen Trapezprismas. Ein solches Trapezprisma ist bevorzugt parallel zur Längserstreckung des Drehrohrs ausgerichtet und weist dementsprechend zwei zum Radius des Drehrohrs geneigte Schenkelflächen auf. Diese können einen Winkel zur Trapezbasis zwischen 15° und 85°, bevorzugt zwischen 35° und 75° und besonders bevorzugt zwischen 60° und 70°, einschließen.

Hinsichtlich der Dimensionierung der Vorsprünge wurden durch die Anmelderin umfangreiche Untersuchungen durchgeführt. Dabei hat sich ergeben, dass sich besonders gute Ergebnisse in Bezug auf eine gründliche Durchmischung des zu brennenden Gutes bei geringer Staubentwicklung dann erzielen lassen, wenn zumindest einige Vorsprünge eine Höhe in bezogen auf das Drehrohr radialer Richtung zwischen 50 mm und 500 mm, bevorzugt zwischen 100 mm und 300 mm und besonders bevorzugt von ca. 200 mm, aufweisen.

Ferner lassen sich besonders gute Ergebnisse im Sinne einer gründlichen Gutdurchmischung und eines schnellen Transportes des Gutes durch die Vorwärmzone des Drehrohrs dadurch erzielen, dass zumindest einige Vorsprünge eine Länge in Längsrichtung des Drehrohrs zwischen 50 mm und 2000 mm, speziell zwischen 100 mm und 1000 mm, bevorzugt zwischen 200 mm und 750 mm und besonders bevorzugt zwischen 350 mm und 450 mm, typischerweise ca. 400 mm, aufweisen.

Ferner kann die Breite zumindest einiger Vorsprünge senkrecht zur Längsrichtung des Drehrohrs zwischen 50 mm und 1000 mm, bevorzugt zwischen 100 mm und 500 mm und besonders bevorzugt zwischen 150 mm und 300 mm, typischerweise 300 mm, betragen.

Wie bereits erwähnt, haben sich bei den Vorsprüngen insbesondere trapezförmige Geometrien als besonders vorteilhaft herausgestellt. Hinsichtlich der Dimensionierung der im Wesentlichen senkrecht zur Ofenlängsachse stehenden Trapezfläche wird bevorzugt, dass die Breite der unteren Trapezbasis zwischen 100 mm und 400 mm, bevorzugt zwischen 150 mm und 300 mm, typischerweise bei ca. 300 mm, liegt und die Breite der oberen Basis zwischen 30 mm und 200 mm, bevorzugt zwischen 50 mm und 200 mm und besonders bevorzugt zwischen 70 mm und 130 mm, typischerweise ca. 100 mm, beträgt.

Erfindungsgemäß sind die Vorsprünge als Gruppen im Wesentlichen parallel zur Längsachse des Drehrohrs hintereinander angeordnet. Dabei wird gemäß den Untersuchungen der Anmelderin bevorzugt, dass das Verhältnis zwischen der Länge eines Vorsprungs in Längsrichtung des Drehrohrs und dem Abstand zwischen zwei in Längsrichtung des Drehrohrs benachbarten Vorsprüngen zwischen ca. 2:1 und 1:2, bevorzugt zwischen ca. 1,5:1 und 1:1,5, liegt und besonders bevorzugt ca. 1:1 beträgt. Hierdurch wird einerseits eine gründliche Gutdurchmischung sichergestellt, andererseits sind die Abstände derart bemessen, dass sich hinreichend breite spiralförmige Transportpfade zwischen den Vorsprüngen ergeben.

Die erfindungsgemäß in der Brennzone vorgesehenen Vorsprünge können dauerhaft mit der inneren Ausmauerung des Drehrohrs verbunden sein. Um jedoch eine sichere Verbindung zwischen der inneren Ausmauerung des Drehrohrs und den Vorsprüngen sicherzustellen, ist nach einer weiteren vorteilhaften Ausgestaltung der Erfindung vorgesehen, dass zumindest einige der Vorsprünge mittels einer verschweißten metallischen Verankerung an der Innenseite des Drehrohrmantels befestigt sind.

Nach einer weiteren vorteilhaften Ausgestaltung der Erfindung ist vorgesehen, dass über den Umfang des Drehrohrs verteilt 3 bis 9, speziell 4 bis 8, besonders bevorzugt 5 bis 7, und ganz besonders bevorzugt 6 Gruppen in Längsrichtung hintereinander angeordneter Vorsprünge vorgesehen sind.

Die erfindungsgemäß vorgesehenen Gruppen von im Wesentlichen parallel zur Längsachse des Drehrohrs hintereinander angeordneten Vorsprüngen können entlang der gesamten Länge der Vorwärmzone angeordnet sein. Nach einer besonders vorteilhaften Ausgestaltung der Erfindung ist vorgesehen, dass sich die Gruppen von Vorsprüngen über ein Fünftel bis ein Drittel der Gesamtlänge des Drehrohrs erstrecken.

Nach einer besonders vorteilhaften Ausgestaltung der Erfindung kann ferner vorgesehen sein, dass in der Einlaufzone des Drehrohrs wenigstens ein weiterer Vorsprung, bevorzugt eine Mehrzahl von weiteren Vorsprüngen, vorgesehen ist, wobei der wenigstens eine weitere Vorsprung wenigstens eine zur Längsachse des Drehrohrs geneigte Gleitfläche zur Förderung des zu brennenden Gutes aus der Einlaufzone in die Vorwärmzone aufweist.

Dabei wird ausgenutzt, dass das zu brennende Gut durch die Rotation des wenigstens einen weiteren Vorsprungs durch das Gutbett auf der wenigstens einen Gleitfläche desselben zu liegen kommt und infolge der besonderen Neigung der Gleitfläche schwerkraftbedingt zügig in Richtung der Vorwärmzone gleitet. Hierbei versteht es sich, dass die Drehrichtung des Drehrohrs und die Ausrichtung der Gleitfläche in Umfangsrichtung des Drehrohrs entsprechend zueinander anzupassen sind. Gleichzeitig wird auch hierdurch die Staubbildung erheblich reduziert, da ein Zermahlen des zu brennenden Gutes an den Verschleißringen der Ofeneinlaufabdichtung infolge einer Rückwärtsbewegung des Gutes in der Einlaufzone wirksam verhindert wird.

Bei der Gleitfläche des wenigstens einen weiteren Vorsprungs können unterschiedliche Neigungswinkel vorgesehen sein. Nach einer vorteilhaften Ausgestaltung der Erfindung weist die Gleitfläche des wenigstens einen weiteren Vorsprungs eine Neigung zur Längsachse des Drehrohrs von 15° bis 70°, insbesondere von 35° bis 55°, auf. Besonders gute Ergebnisse wurden bei einem Neigungswinkel zwischen 40° und 50°, speziell ca. 45° erzielt.

Aufgrund der in der Einlaufzone des Drehrohrs bereits herrschenden hohen Temperaturen wird bevorzugt, dass der wenigstens eine weitere Vorsprung ein feuerfestes Material enthält. Hierbei kann es sich um verschiedene hoch temperaturbeständige Materialien handeln, wie aus dem Stand der Technik an sich bekannt. Als besonders geeignet erweist sich Beton, insbesondere Feuerbeton, wie an sich aus dem Stand der Technik bekannt.

Für den wenigstens einen weiteren Vorsprung haben sich in Versuchen der Anmelderin verschiedene Geometrien als geeignet herausgestellt. Bevorzugt werden prismatische Geometrien, insbesondere in Form eines geraden Prismas dreieckiger Grundfläche, speziell in Form eines rechtwinkligen Dreiecks, bei der die wenigstens eine Gleitfläche durch die Hypotenuse des rechtwinkligen Dreiecks gebildet wird.

Für eine besonders gute Wirksamkeit in Bezug auf die Förderung des zu brennenden Gutes von der Einlaufzone in Richtung der Vorwärmzone ist die Höhe des wenigstens einen Vorsprungs, d.h. die Erstreckung in bezogen auf das zylindrische Drehrohr radialer Richtung, von Bedeutung. Nach einer vorteilhaften Ausgestaltung der Erfindung weist der wenigstens eine weitere Vorsprung eine sich in radialer Richtung des Drehrohrs erstreckende Höhe von 100 mm bis 500 mm, bevorzugt von 160 mm bis 300 mm und besonders bevorzugt von 180 mm bis 250 mm, typischerweise ca. 200 mm, auf. Hierdurch ist sichergestellt, dass auf der wenigstens einen Gleitfläche des wenigstens einen weiteren Vorsprungs hinreichend viel Gut aufliegt und durch die Neigung der Gleitfläche in der Folge in Richtung der Vorwärmzone gleitet. Ferner kann vorgesehen sein, dass der wenigstens eine weitere Vorsprung eine sich im Wesentlichen parallel zur Längsachse des Drehrohrs erstreckende Länge von 100 mm bis 2000 mm, bevorzugt 300 mm bis 500 mm und ganz besonders bevorzugt 350 mm bis 450 mm, typischerweise ca. 400 mm, aufweist.

Der wenigstens eine weitere Vorsprung kann dauerhaft mit der inneren Ausmauerung des Drehrohrs verbunden sein. Um jedoch eine sichere Verbindung zwischen der inneren Ausmauerung des Drehrohrs und dem wenigstens einen weiteren Vorsprung sicherzustellen, ist nach einer weiteren vorteilhaften Ausgestaltung der Erfindung vorgesehen, dass der wenigstens eine weitere Vorsprung mittels einer metallischen Verankerung, insbesondere einer verschweißten metallischen Verankerung an der Innenseite des Drehrohrmantels befestigt ist.

Nach einer besonders vorteilhaften Ausgestaltung der Erfindung ist vorgesehen, dass in der Einlaufzone des Drehrohrs eine Mehrzahl von weiteren Vorsprüngen vorgesehen ist, wobei die weiteren Vorsprünge derart als Gruppe aneinandergereiht angeordnet sind, dass die jeweiligen Gleitflächen der weiteren Vorsprünge eine gemeinsame Gleitfläche für das zu brennende Gut bilden. Hierdurch wird eine besonders wirkungsvolle Förderung des zu brennenden Gutes von der Einlaufzone des Drehrohrs zu dessen Vorwärmzone erreicht. Hierbei können die einzelnen weiteren Vorsprünge auf Stoß, d.h. im Wesentlichen spaltfrei aneinandergereiht sein. Ebenso ist eine Aneinanderreihung mit dazwischen liegendem Spalt möglich, um beispielsweise thermische Ausdehnungen zu berücksichtigen, wobei die Spaltbreite jedoch derart bemessen sein muss, dass die Funktion einer gemeinsamen Gleitfläche erhalten bleibt.

Dadurch, dass durch mehrere als Gruppe aneinandergereihte weitere Vorsprünge eine gemeinsame Gleitfläche breitgestellt wird, kann einerseits eine besonders lange Gleitfläche bereitgestellt werden, welche sich praktisch entlang der gesamten Ausdehnung der Einlaufzone erstreckt. Gleichzeitig können im Falle einer Beschädigung beispielsweise eines einzelnen weiteren Vorsprungs aus der Gruppe aneinandergereihter weiterer Vorsprünge dieser gezielt ersetzt werden, ohne die Gesamtkonstruktion demontieren zu müssen.

Die Gruppe aneinandergereihter weiterer Vorsprünge kann eine unterschiedliche Zahl an weiteren Vorsprüngen umfassen. Insbesondere kann die gemeinsame Gleitfläche für das zu brennende Gut durch 3 bis 9 weitere Vorsprünge, insbesondere durch 5 bis 7 weitere Vorsprünge und ganz besonders bevorzugt durch 6 weitere Vorsprünge gebildet werden.

Besonders bevorzugt im Sinne einer möglichst einfachen Konstruktion des erfindungsgemäßen Drehrohrofens ist, dass die Mehrzahl von weiteren Vorsprüngen im Wesentlichen identisch zueinander ausgebildet sind, derart, dass eine gemeinsame Gleitfläche mit im Wesentlichen konstantem Gefälle bzw. Gleitwinkel zur Längsachse des Drehrohrs ausgebildet ist.

Eine weitere Verbesserung der Förderung des zu brennenden Gutes durch die Einlaufzone des Drehrohrs wird dadurch erzielt, dass über den Umfang des Drehrohrs 2 bis 8, insbesondere 4 bis 6 und ganz besonders bevorzugt 6 weitere Vorsprünge oder Gruppen aneinandergereihter weiterer Vorsprünge, angeordnet sind.

Nach einer weiteren besonders vorteilhaften Ausgestaltung der Erfindung kann vorgesehen sein, dass das Drehrohr im Bereich der Auslaufzone wenigstens einen zusätzlichen Vorsprung, bevorzugt eine Gruppe von zusätzlichen Vorsprüngen, zur Vermeidung der Clusterbildung im gebrannten Gut aufweist. Hierdurch setzt im Bereich des Auslaufendes eine besonders gleichmäßige Kühlung des gesamten gebrannten Gutes ein, wodurch sich die Ofenleistung und die Qualität des gebrannten Gutes wirksam verbessern lässt und zudem nachgelagerte Anlagenkomponenten, beispielsweise Rostkühler, vor Überhitzung geschützt werden. Dies führt wiederum zu einer verlängerten Lebensdauer des gesamten Ofens.

Bevorzugt ist dabei im Bereich der Auslaufzone eine Mehrzahl von zusätzlichen Vorsprüngen vorgesehen, wobei die zusätzlichen Vorsprünge in Umfangsrichtung des Drehrohrs als Gruppen angeordnet sind. Dabei sind die gruppenweise über den Umfang angeordneten zusätzlichen Vorsprünge in Längsrichtung des Drehrohrs bevorzugt versetzt zueinander angeordnet, um die Materialdurchmischung und damit die Gleichmäßigkeit der Kühlwirkung zu maximieren. Dabei sind wiederum in Längsrichtung des Drehrohrs bevorzugt eine Mehrzahl von Gruppen zusätzlicher Vorsprünge - beispielsweise drei - vorgesehen.

Die zusätzlichen Vorsprünge können unterschiedliche Geometrien aufweisen. Besonders bevorzugt ist die Geometrie eines Pyramidenstumpfes mit der Grundfläche eines gleichschenkligen spitzwinkligen Dreiecks mit aus Stabilitätsgründen bevorzugt abgestumpfter Spitze, wobei der abgestumpfte spitze Winkel in Drehrichtung des Drehrohrs vorauseilt und somit durch das gebrannte Gut gleichsam durchpflügt. Um eine hinreichende Hitzebeständigkeit sicherzustellen, kann vorgesehen sein, dass die zusätzlichen Vorsprünge Beton, insbesondere Feuerbeton nach dem Stand der Technik enthalten. Bevorzugt weisen die zusätzlichen Vorsprünge eine Höhe zwischen 100 mm und 300 mm, bevorzugt von ca. 200 mm, und eine Länge in Umfangsrichtung des Drehrohrs (Höhe der gleichschenkligen dreieckigen Basisfläche des Pyramidenstumpfes) zwischen 300 mm und 500 mm, bevorzugt von ca. 400 mm auf. Die Breite der dem spitzen Winkel der gleichschenkligen dreieckigen Basisfläche gegenüberliegenden Dreiecksseite weist zwischen 50 mm und 150 mm, bevorzugt ca. 300 mm auf.

Die eingangs genannte Aufgabe wird verfahrensmäßig nach einem weiteren Aspekt der vorliegenden Erfindung mit einem Verfahren zum Brennen von karbonathaltigem Gut, insbesondere von Kalkstein oder Dolomit, gelöst, welches folgende Schritte aufweist:
- Einleiten des karbonathaltiges Gutes in das Drehrohr eines Drehrohrofens nach einem der Ansprüche 1 bis 14,
- Brennen des karbonathaltiges Gutes, wobei sich das karbonathaltige Gut durch das Drehrohr von der Einlaufzone durch die Vorwärmzone und die Brennzone zur Auslaufzone bewegt, wobei sich das Drehrohr in einer Drehrichtung dreht,
- Förderung des karbonathaltigen Gutes durch die Vorwärmzone, wobei die Gruppen von im Wesentlichen parallel zur Längsachse des Drehrohrs hintereinander angeordnet Vorsprüngen derart in Längsrichtung des Drehrohrs versetzt zueinander angeordnet sind und die Rotationsgeschwindigkeit und Neigung des Drehrohrs derart angepasst sind, dass das Gut auf spiralförmigen Transportpfaden durch die Vorwärmzone gefördert wird.

Für das Verfahren gelten die vorstehend genannten Vorteile entsprechend. Insbesondere wird ein effizientes Brennverfahren vorgeschlagen, welches sich durch einen hohen Materialdurchsatz durch den Drehrohrofen, eine gleichmäßig hohe Produktqualität bei dem gebrannten Gut infolge vollständiger Kalzinierung sowie durch eine einfache Durchführbarkeit auszeichnet. Speziell wird in der Vorwärmzone durch die Gruppen von Vorsprüngen eine gründliche Durchmischung des zu brennenden Gutes bei minimaler Staubbildung erreicht.

Im Folgenden wird die Erfindung anhand einer ein Ausführungsbeispiel darstellenden Zeichnung näher erläutert. Es zeigen:
- Fig. 1: das Drehrohr eines Drehrohrofens in perspektivischer Ansicht,
- Fig. 2: das Drehrohr der Fig. 1 in unterbrochener perspektivischer Längsschnittansicht,
- Fig. 3: einen vergrößerten Ausschnitt der Vorwärmzone des Drehrohrs der Fig. 1 in perspektivischer Längsschnittansicht,
- Fig. 4: einen Vorsprung der Vorwärmzone des Drehrohrs der Fig. 1 in perspektivischer Ansicht,
- Fig. 5: die zweidimensionale unterbrochene Darstellung der "abgewickelten" Offeninnenwand des Drehrohrs der Fig. 2 in stark schematischer Form,
- Fig. 6: eine Ausschnittvergrößerung des Drehrohrs der Fig. 1 mit teilweise ausgeschnittener Ofenwand in perspektivischer Ansicht,
- Fig. 7: einen vergrößerten Ausschnitt der Einlaufzone des Drehrohrs der Fig. 1 in perspektivischer Längsschnittansicht,
- Fig. 8: einen weiteren Vorsprung in der Einlaufzone des Drehrohrs der Fig. 1 in perspektivischer Ansicht,
- Fig. 9: einen vergrößerten Ausschnitt der Auslaufzone des Drehrohrs der Fig. 1 in perspektivischer Längsschnittansicht, und
- Fig. 10: einen zusätzlichen Vorsprung in der Auslaufzone des Drehrohrs der Fig. 1 in perspektivischer Ansicht.

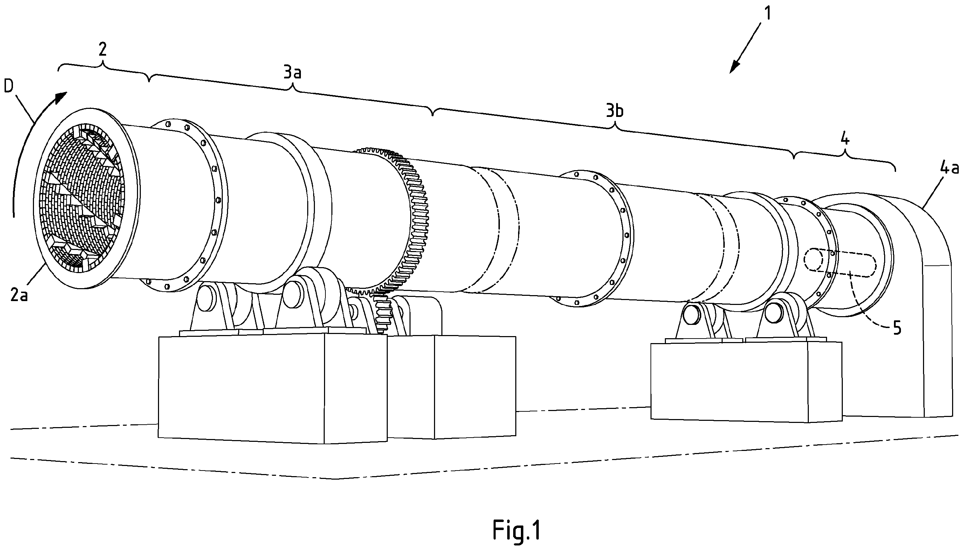

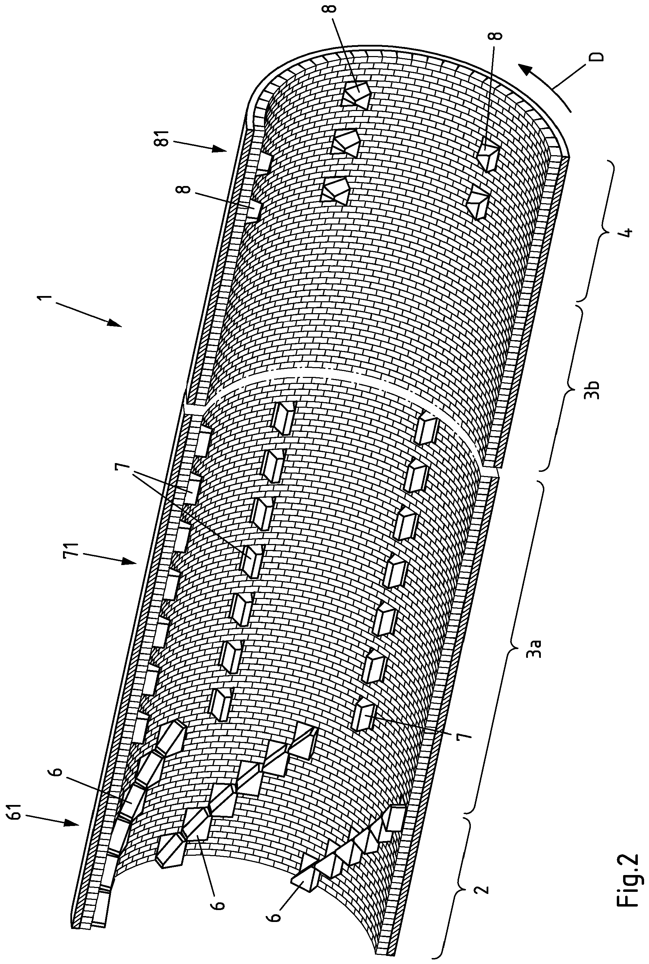

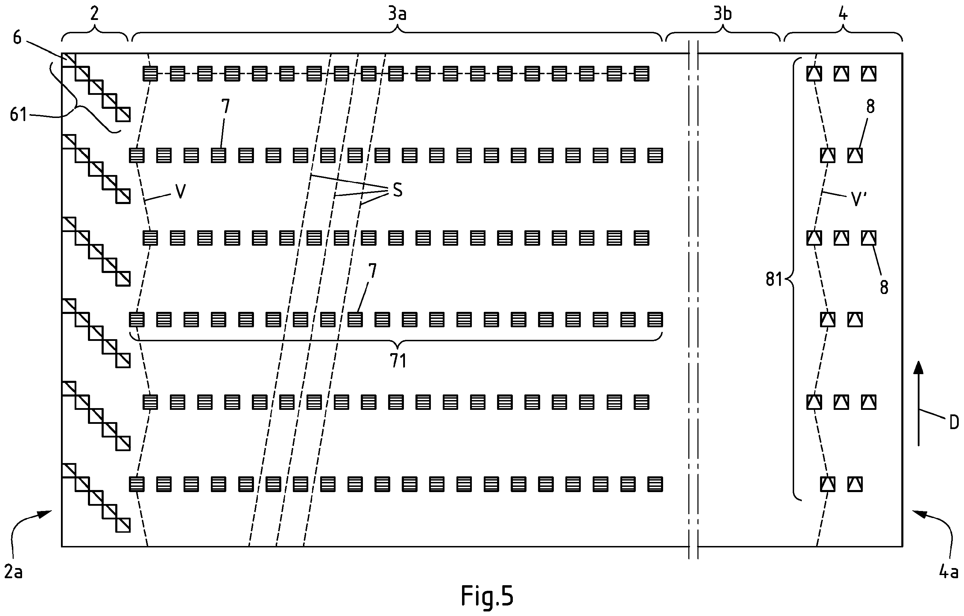

In Fig. 1 ist das Drehrohr 1 eines Drehrohrofens mit üblichen Lagerungs- und Antriebskomponenten, auf die im Folgenden nicht näher eingegangen wird, dargestellt. Das Drehrohr 1 umfasst ein - hier vorderseitig dargestelltes - Einlaufende 2a und ein rückseitiges Auslaufende 4a. Entlang der Längserstreckung des Drehrohrs 1 umfasst das Drehrohr 1 in Bezug auf den Materialaufgabe-, Brenn- und Materialaustragprozess eine Einlaufzone 2, eine Vorwärmzone 3a (auch "Übergangszone" genannt), eine Brennzone 3b sowie eine Auslaufzone 4 (s. auch Fig. 2 und 5). Im Bereich des Auslaufendes 4a ist eine Brennerlanze 5 angeordnet, mittels derer im Betrieb des Drehrohrofens eine in das Drehrohr 1 hineinragende Flamme erzeugt wird. Weist das Drehrohr 1 beispielsweise eine Gesamtlänge von ca. 90 m auf, so beträgt die Länge der Einlaufzone 2 typischerweise ca. 2 m, die der Vorwärmzone 3a ca. 32 m, die Länge der Brennzone 3b ca. 53 m und die der Auslaufzone 4 ca. 3 m. Die höchsten durch die Brennerflamme erzeugten Temperaturen werden im Betrieb des Drehrohrofens in der Brennzone 3b erzielt und betragen ca. 1500 - 1600°C, so dass in dieser Zone der ganz überwiegende Teile der Kalzinierungsreaktion abläuft.

Wie in der perspektivischen Längsschnittansicht des Drehrohrs 1 der Fig. 2 dargestellt, umfasst das Drehrohr 1 in der Vorwärmzone 3a eine Mehrzahl von Vorsprüngen 7 (auch "Mitnehmer" genannt). Diese sind, wie erkennbar, als Gruppen 71 parallel zur Längsachse des Drehrohrs 1 hintereinander angeordnet. Über den Innenumfang des Drehrohrs 1 verteilt sind insgesamt sechs Gruppen 71 von Vorsprüngen 7 vorgesehen, wie insbesondere der Darstellung der "abgewickelten" Offeninnenwand der Fig. 5 zu entnehmen ist. Die Vorsprünge 7 sind derart angeordnet, dass in Umfangsrichtung des Drehrohrs 1 benachbart angeordnete Vorsprünge 7 benachbarter Gruppen 71 von Vorsprüngen 7 in Längsrichtung des Drehrohrs 1 versetzt zueinander angeordnet sind (s. Fig. 5). Da, wie in Fig. 2 und 5 erkennbar, die gruppenweise in Reihen angeordneten Vorsprünge 7 identische Reihen bilden - d.h. die Länge der Vorsprünge 7 und der Zwischenräume zwischen den Vorsprüngen 7 ist für jede Gruppe 71 identisch -, sind dementsprechend auch benachbarte ganze Gruppen 71 in Längsrichtung des Drehrohrs 1 zueinander versetzt. Die Gruppen 71 der Vorsprünge 7 nehmen bevorzugt ein Drittel bis ein Fünftel der Gesamtlänge des Drehrohrs 1 in Anspruch.

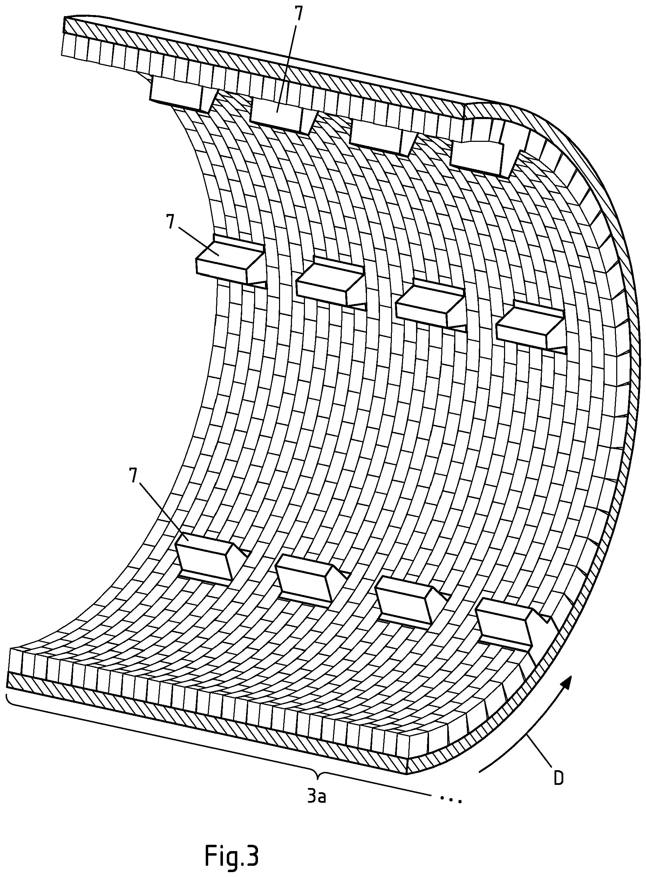

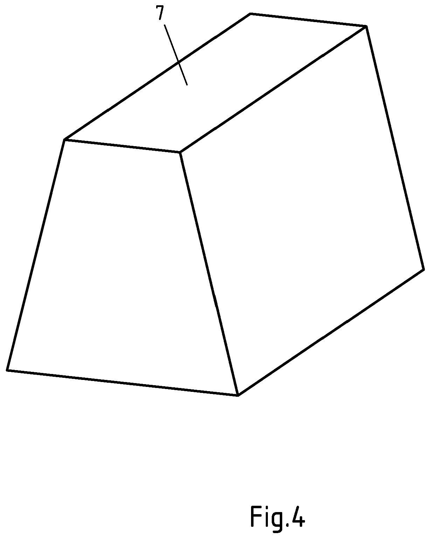

Eine genauere Darstellung der Vorsprünge 7 zeigt Fig. 3. Hier und in Fig. 4 ist zunächst erkennbar, dass die Vorsprünge 7 jeweils als Trapezprisma ausgebildet sind mit einer Länge von vorliegend ca. 400 mm und einer Höhe von vorliegend ca. 200 mm. Ferner beträgt die Breite der unteren Trapezbasis ca. 300 mm, während die obere Trapezbasis eine Breite von vorliegend ca. 100 mm aufweist. Damit werden entlang der Längserstreckung der Vorsprünge 7 geneigte Schenkelflächen 7a definiert, vorliegend in einem Winkel von ca. 76° zur unteren Trapezbasis. Durch die trapezförmige Ausbildung der Vorsprünge 7 ist sichergestellt, dass das im Ofenbetrieb durch die Vorsprünge 7 in der Vorwärmzone 3a durchmischte Gut nicht unter erhöhter Staubbildung von den Vorsprüngen 7 herabfällt, sondern entlang der Schenkelflächen 7a herabgleitet.

Wie anhand der in Fig. 4 dargestellten Ofenausmauerung erkennbar ist, entspricht die Länge der Zwischenräume zwischen den aneinandergereihten Vorsprüngen 7 einer Gruppe 71 etwa der Länge der Vorsprünge 7 selbst und die Vorsprünge 7 jeweils benachbarter Gruppen 71 sind somit zueinander auf "Lücke" versetzt. Hierdurch werden spiral- oder schneckenförmige Transportpfade durch die Vorwärmzone 3a des Drehrohrs 1 gebildet (in Fig. 5 als schräge gestrichelte Linien S dargestellt), auf denen das zu brennende Gut schnell durch die Vorwärmzone 3a transportiert werden kann.

In der Längsschnittdarstellung der Fig. 2 ist weiterhin erkennbar, dass in der Einlaufzone 2 des Drehrohrs 1 eine Mehrzahl weiterer Vorsprünge 6 angeordnet sind, die eine spezifische Form aufweisen und als Gruppen 61 in gestufter Form aneinandergereiht angeordnet sind, wie im Folgenden beschrieben wird. Die Vorsprünge 6 werden fachsprachlich auch als "Verdränger" bezeichnet.

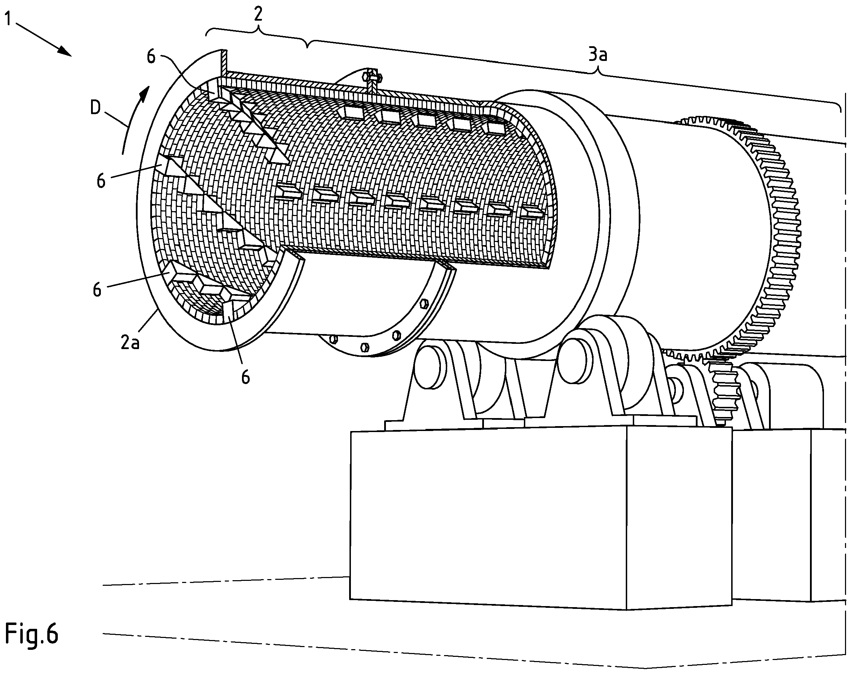

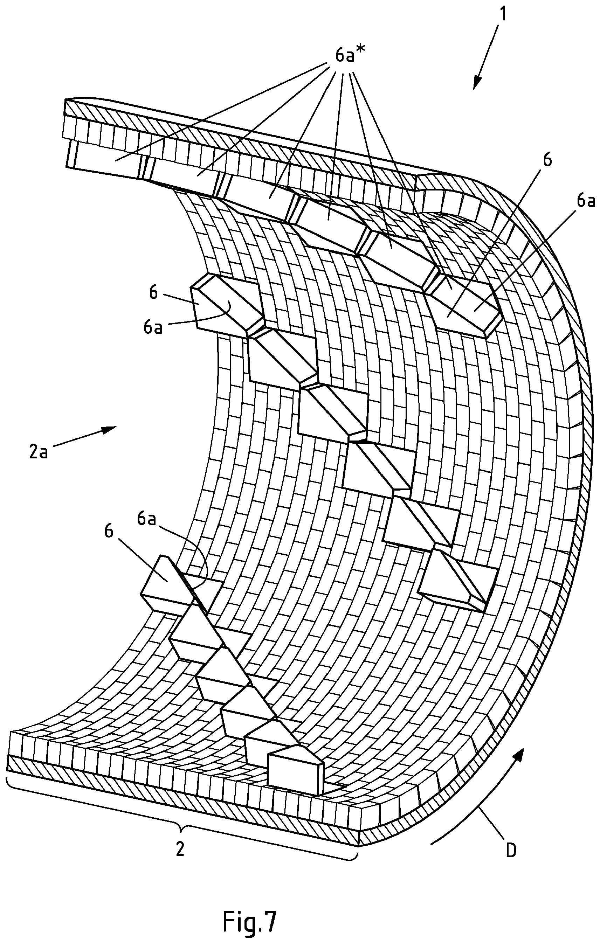

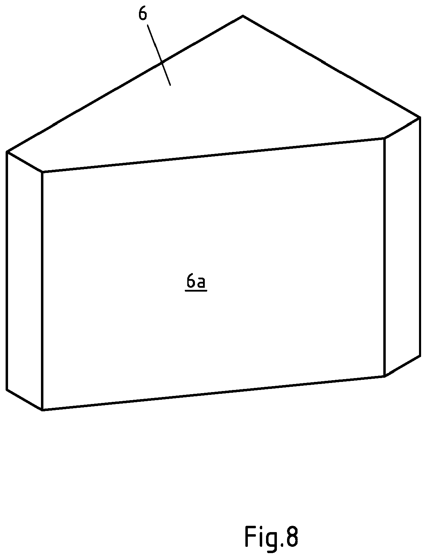

Wie in den Fig. 1, 2 sowie 5 - 8 gezeigt, sind die als Gruppe 61 von vorliegend sechs aneinandergereihten weiteren Vorsprünge 6 im Wesentlichen zueinander identisch ausgebildet und weisen gemäß Fig. 8 vorliegend im Wesentlichen die Form eines geraden Prismas mit der Grundfläche eines rechtwinkligen, gleichschenkligen Dreiecks auf, wobei die nichtrechtwinkligen Winkel des Dreiecks abgestumpft sind. Jeder weitere Vorsprung 6 weist eine Gleitfläche 6a auf, welche zur Längsachse des Drehrohres 1 geneigt angeordnet ist. Bevorzugt ist dabei ein Neigungswinkel von ca. 45° gewählt. Wie erwähnt, sind die weiteren Vorsprünge 6 in gestufter Form aneinander gereiht, und zwar derart, dass durch die einzelnen Gleitflächen 6a der weiteren Vorsprünge 6 eine gemeinsame Gleitfläche 6a* gebildet wird, welche vorliegend ebenfalls in einem Winkel von ca. 45° zur Längsachse des Drehrohrs 1 geneigt ist.

Ferner sind die Gleitflächen 6a der weiteren Vorsprünge 6 bzw. die gemeinsame Gleitfläche 6a* der gruppenweise aneinandergereihten Vorsprünge 6 relativ zur Drehrichtung D des Drehrohrs 1 derart ausgerichtet, dass im Betrieb des Ofens das zu brennende Gut (nicht dargestellt) auf den Gleitflächen 6a der weiteren Vorsprünge 6 zu liegen kommt, und aufgrund der gewählten Neigung der Gleitflächen 6a zur Längsachse des Drehrohrs 1 schwerkraftbedingt zügig in Richtung der Vorwärmzone 3 gleitet, ohne dass es dabei zu einer unerwünschten Rückwärtsbewegung des zu brennenden Gutes in Richtung des Einlaufendes 2a kommt.

Wie in Fig. 1 und 5 gezeigt, sind über den Umfang verteilt an der Innenwand des Drehrohrs 1 eine Mehrzahl von Gruppen 61 gestuft aneinandergereihter weiterer Vorsprünge 6 vorgesehen. Vorliegend ist eine Anzahl von sechs Gruppen 61 gewählt.

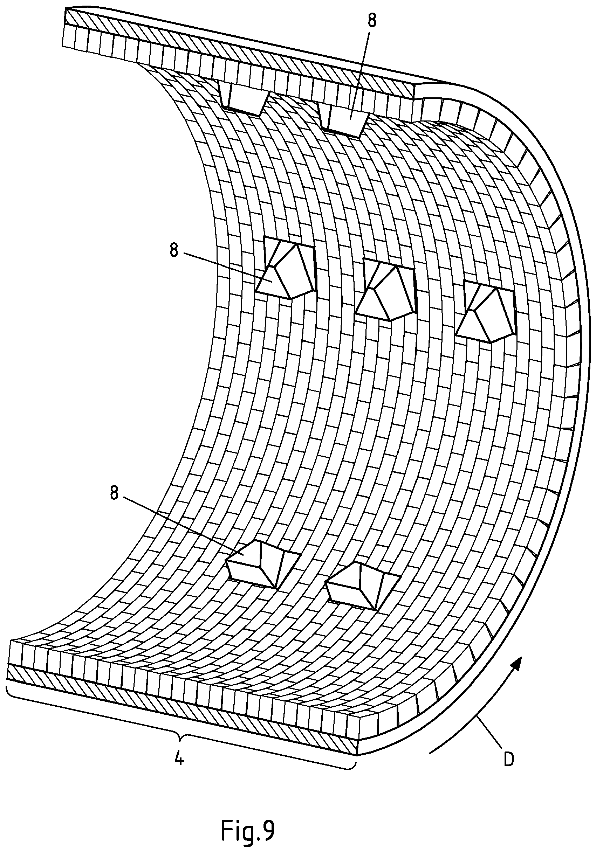

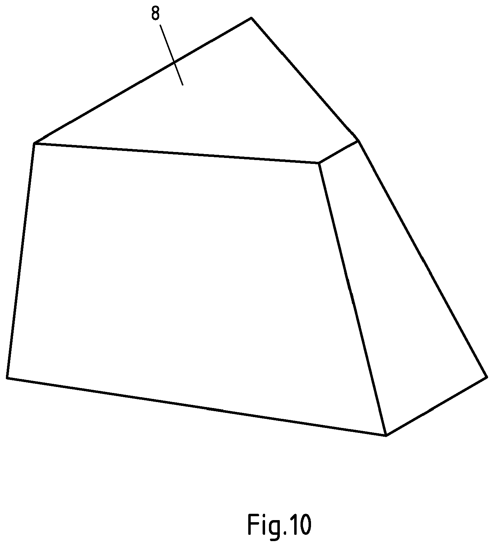

Ferner ist in Fig. 2 dargestellt, dass in der Auslaufzone 4 des Drehrohrs 1 eine Mehrzahl von zusätzlichen Vorsprüngen 8 vorgesehen ist, wobei die zusätzlichen Vorsprünge 8 in Umfangsrichtung des Drehrohrs 1 als Gruppen 81 und in Längsrichtung des Drehrohrs 1 dabei versetzt zueinander angeordnet sind. Diese zusätzlichen Vorsprünge 8 (fachsprachlich "Schwerter") dienen zur Vermeidung der Clusterbildung im gebrannten Gut. Wie in Fig. 10 gezeigt, weisen diese zusätzlichen Vorsprünge 8 die Form eines Pyramidenstumpfes mit der Grundfläche eines gleichschenkligen spitzwinkligen Dreiecks auf, wobei der spitze Winkel in Drehrichtung D des Drehrohrs 1 vorauseilt und aus Stabilitätsgründen leicht abgestumpft ist. Die Auslaufzone 4 mit den zusätzlichen Vorsprüngen 8 ist der besseren Übersichtlichkeit halber nochmal in Fig. 9 im Detail dargestellt. Die relative Anordnung der einzelnen Gruppen 81 der zusätzlichen Vorsprünge 8 ("Schwerter") zueinander und zu den Gruppen 71 der Vorsprünge 7 ("Mitnehmer") in der Vorwärmzone zeigt Fig. 5.

In Fig. 5 ist nun in stark schematischer Form eine Darstellung der "abgewickelten" Ofeninnenwand des Drehrohrs 1 gezeigt. Dies bedeutet, dass die Verteilung sämtlicher vorgesehener Vorsprünge 7 ("Mitnehmer") in der Vorwärmzone 3a, weitere Vorsprünge 6 ("Verdränger") in der Einlaufzone 2 sowie zusätzlicher Vorsprünge 8 ("Schwerter") in der Auslaufzone 4 des Drehrohrs 1 in zweidimensionaler Darstellung gezeigt ist, wobei die Brennzone 3b, in der vorliegend keine Vorsprünge vorgesehen sind, aus Platzgründen nicht vollständig dargestellt ist. Demnach sind in der Einlaufzone 2 über den Umfang verteilt sechs Gruppen 61 jeweils fünf gestuft aneinandergereihter weiterer Vorsprünge 6 ("Verdränger") vorgesehen. In der sich an die Einlaufzone 2 anschließenden Vorwärmzone 3 sind ebenfalls sechs Gruppen 71 in Längsrichtung des Drehrohrs 1 hintereinander angeordneter erfindungsgemäßer Vorsprünge 7 ("Mitnehmer") vorgesehen. In Umfangsrichtung benachbart angeordnete Vorsprünge 7 sind versetzt zueinander positioniert, wie durch die Hilfslinie V in Fig. 5 dargestellt. Durch diese versetzte Anordnung ergeben sich im Drehrohr 1 spiralförmige Transportpfade, auf denen das zu brennende Gut sich hindernisfrei durch die Vorwärmzone 3a bewegen kann. Die spiralförmigen Transportpfade sind in der zweidimensionalen Darstellung der Fig. 5 exemplarisch als parallele schräg verlaufende Linien S dargestellt.

Ferner sind in Fig. 5 die in der Auslaufzone 4 des Drehrohrs 1 vorgesehenen zusätzlichen Vorsprünge 8 ("Schwerter") dargestellt. Diese sind, wie erwähnt, in Umfangsrichtung des Drehrohrs 1 in Gruppen 81 angeordnet, wobei die zusätzlichen Vorsprünge 8 einer Gruppe 81 in Längsrichtung zueinander versetzt sind, um eine maximale Menge an gebranntem Gut zu bearbeiten. Der Versatz in Längsrichtung des Drehrohrs 1 ist in Fig. 5 durch die Hilfslinie V' dargestellt. Vorliegend sind zwei Gruppen 81 à fünf zusätzlichen Vorsprüngen 8 vorgesehen. Die am Auslaufende 4 des Drehrohrs angeordnete Gruppe 81 umfasst lediglich drei zusätzliche Vorsprünge 8. Im Gegensatz zu den Vorsprüngen 6 der Einlaufzone 2 reichen die zusätzlichen Vorsprünge 8 nicht bis ans Auslaufende 4a des Drehrohrs 1 heran. Vielmehr kann ein gewisser Abstand von bevorzugt ca. 1 m gewählt sein.

## Patentansprüche

1. Drehrohrofen zum Brennen von karbonathaltigem Gut, insbesondere von Kalkstein oder Dolomit, umfassend ein Drehrohr (1) mit einem Einlaufende (2a) zur Aufgabe des zu brennenden Gutes und einem Auslaufende (4a) zur Ausleitung des gebranntes Gutes, und eine im Bereich des Auslaufendes (4a) angeordnete Brennereinheit (5), wobei das Drehrohr (1) an seinem Einlaufende (2a) eine Einlaufzone (2) aufweist und an seinem Auslaufende (4a) eine Auslaufzone (4) aufweist, wobei zwischen der Einlaufzone (2) und Auslaufzone (4) in Transportrichtung des Gutes eine Vorwärmzone (3a) und eine Brennzone (3b) angeordnet sind,
**dadurch gekennzeichnet, dass**
in der Vorwärmzone (3a) des Drehrohrs (1) eine Mehrzahl von Vorsprüngen (7) angeordnet ist, wobei die Vorsprünge (7) als Gruppen (71) im Wesentlichen parallel zur Längsachse des Drehrohrs (1) hintereinander angeordnet sind, wobei in Umfangsrichtung des Drehrohrs (1) benachbart angeordnete Vorsprünge (7) benachbarter Gruppen (71) von Vorsprüngen (7) in Längsrichtung des Drehrohrs (1) versetzt zueinander angeordnet sind, derart, dass in der Vorwärmzone (3a) spiralförmige Transportpfade (S) für das zu brennende Gut gebildet sind.

2. Drehrohrofen nach Anspruch 1,
**dadurch gekennzeichnet, dass**
die Vorsprünge jeweils ein feuerfestes Material enthalten,
wobei optional das feuerfeste Material Beton, insbesondere Feuerbeton, ist.

3. Drehrohrofen nach einem der Ansprüche 1 oder 2,
**dadurch gekennzeichnet, dass**
zumindest einige Vorsprünge (7) eine prismatische Geometrie, insbesondere die Geometrie eines Trapezprismas, bevorzugt eines gleichschenkligen Trapezprismas, aufweisen.

4. Drehrohrofen nach einem der Ansprüche 1 bis 3,
**dadurch gekennzeichnet, dass**
zumindest einige Vorsprünge (7) eine Höhe in bezogen auf das Drehrohr (1) radialer Richtung zwischen 50 mm und 500 mm, bevorzugt zwischen 100 mm und 300 mm und besonders bevorzugt von ca. 200 mm, aufweisen, und/oder zumindest einige Vorsprünge (7) eine Länge in Längsrichtung des Drehrohrs (1) zwischen 50 mm und 2000 mm, speziell zwischen 100 mm und 1000 mm, bevorzugt zwischen 200 mm und 750 mm und besonders bevorzugt zwischen 350 mm und 450 mm, aufweisen,
und/oder dass zumindest einige Vorsprünge (7) eine Breite senkrecht zur Längsrichtung des Drehrohrs (1) zwischen 50 mm und 1000 mm, bevorzugt zwischen 100 mm und 500 mm und besonders bevorzugt zwischen 150 mm und 300 mm, aufweisen.

5. Drehrohrofen nach einem der Ansprüche 3 bis 4,
**dadurch gekennzeichnet, dass**
zumindest einige Vorsprünge (7) die Geometrie eines Trapezprismas aufweisen, wobei die Breite der unteren Trapezbasis zwischen 100 mm und 400 mm, bevorzugt zwischen 150 mm und 300 mm, liegt und die Breite der oberen Basis zwischen 30 mm und 200 mm, bevorzugt zwischen 50 mm und 200 mm und besonders bevorzugt zwischen 70 mm und 130 mm.

6. Drehrohrofen nach einem der Ansprüche 1 bis 5,
**dadurch gekennzeichnet, dass**
das Verhältnis zwischen der Länge eines Vorsprung (7) in Längsrichtung des Drehrohrs (1) und dem Abstand zwischen zwei in Längsrichtung des Drehrohrs (1) benachbarten Vorsprüngen (7) zwischen ca. 2:1 und 1:2, bevorzugt zwischen ca. 1,5:1 und 1:1,5, liegt und besonders bevorzugt ca. 1:1 beträgt.

7. Drehrohrofen nach einem der Ansprüche 1 bis 6,
**dadurch gekennzeichnet, dass**
wenigstens einige der Vorsprünge (7) an der Innenwand des Drehrohrs (1) mittels einer metallischen Verankerung, insbesondere einer verschweißten metallischen Verankerung, befestigt sind.

8. Drehrohrofen nach einem der Ansprüche 1 bis 7,
**dadurch gekennzeichnet, dass**
über den Umfang des Drehrohrs (1) verteilt 3 bis 9, speziell 4 bis 8, besonders bevorzugt 5 bis 7, und ganz besonders bevorzugt 6 Gruppen (71) in Längsrichtung hintereinander angeordneter Vorsprünge (7) vorgesehen sind.

9. Drehrohrofen nach einem der Ansprüche 1 bis 8,
**dadurch gekennzeichnet, dass**
die Gruppen von im Wesentlichen parallel zur Längsachse des Drehrohrs (1) hintereinander angeordneten Vorsprüngen (7) sich über ein Fünftel bis ein Drittel der Gesamtlänge des Drehrohrs (1) erstrecken.

10. Drehrohrofen nach einem der Ansprüche 1 bis 9,
**dadurch gekennzeichnet, dass**
in der Einlaufzone (2) des Drehrohrs (1) wenigstens ein weiterer Vorsprung (6), bevorzugt eine Mehrzahl von weiteren Vorsprüngen (6), vorgesehen ist, wobei der wenigstens eine weitere Vorsprung (6) wenigstens eine zur Längsachse des Drehrohrs (1) geneigte Gleitfläche (6a) zur Förderung des zu brennenden Gutes aus der Einlaufzone (2) in die Vorwärmzone (3a) aufweist.

11. Drehrohrofen nach Anspruch 10,
**dadurch gekennzeichnet, dass**
in der Einlaufzone (2) des Drehrohrs (1) eine Mehrzahl von weiteren Vorsprüngen (6) vorgesehen ist, wobei die weiteren Vorsprünge (6) derart als Gruppe (61) aneinandergereiht angeordnet sind, dass die jeweiligen Gleitflächen (6a) der weiteren Vorsprünge eine gemeinsame Gleitfläche (6a*) für das zu brennende Gut bilden.

12. Drehrohrofen nach Anspruch 11,
**dadurch gekennzeichnet, dass**
sich die durch die Mehrzahl von weiteren Vorsprüngen (6) gebildete gemeinsame Gleitfläche (6a*) im Wesentlichen über die gesamte Länge der Einlaufzone (2) erstreckt.

13. Drehrohrofen nach einem der Ansprüche 10 bis 12,
**dadurch gekennzeichnet, dass**
die wenigstens eine Gleitfläche (6a) des wenigstens einen weiteren Vorsprungs (6) eine Neigung zur Längsachse des Drehrohrs (1) von 15° bis 70°, insbesondere von 25° bis 65°, speziell von 35° bis 55° und besonders bevorzugt von 40° bis 50°, aufweist.

14. Drehrohrofen nach einem der Ansprüche 1 bis 13,
**dadurch gekennzeichnet, dass**
im Bereich der Auslaufzone (4) eine Mehrzahl von zusätzlichen Vorsprüngen vorgesehen ist, wobei die zusätzlichen Vorsprünge (8) in Umfangsrichtung des Drehrohrs (1) als Gruppen (81), in Längsrichtung des Drehrohrs (1) dabei bevorzugt versetzt zueinander, angeordnet sind,
worin optional in Längsrichtung des Drehrohrs (1) eine Mehrzahl von Gruppen (81) zusätzlicher Vorsprünge (8) vorgesehen sind.

15. Verfahren zum Brennen von karbonathaltigem Gut, insbesondere von Kalkstein oder Dolomit,
**gekennzeichnet durch** folgende Schritte:
- Einleiten des karbonathaltiges Gutes in das Drehrohr (1) eines Drehrohrofens nach einem der Ansprüche 1 bis 14,
- Brennen des karbonathaltiges Gutes, wobei sich das karbonathaltige Gut durch das Drehrohr von der Einlaufzone (2) durch die Vorwärmzone (3a) und die Brennzone (3b) zur Auslaufzone (4) bewegt, wobei sich das Drehrohr in einer Drehrichtung (D) dreht,
- Förderung des karbonathaltigen Gutes durch die Brennzone (3), wobei die Gruppen (71) von im Wesentlichen parallel zur Längsachse des Drehrohrs (1) hintereinander angeordnet Vorsprüngen (7) derart in Längsrichtung des Drehrohrs (1) versetzt zueinander angeordnet sind und die Rotationsgeschwindigkeit und Neigung des Drehrohrs(1) derart angepasst sind, dass das Gut auf spiralförmigen Transportpfaden (S) durch die Vorwärmzone (3a) gefördert wird.

## Claims

1. A rotary kiln for burning carbonate-containing material, in particular limestone or dolomite, comprising a rotary tube (1) having an inlet end (2a) for feeding in the material to be burned and an outlet end (4a) for discharging the burned material, and a calciner unit (5) which is arranged in the region of the outlet end (4a), the rotary tube (1) having an inlet zone (2) at its inlet end (2a) and having an outlet zone (4) at its outlet end (4a), with a preheating zone (3a) and a burning zone (3b) being arranged between the inlet zone (2) and the outlet zone (4) in the transport direction of the material,
**characterized in that**
a plurality of projections (7) are arranged in the preheating zone (3a) of the rotary tube (1), the projections (7) being arranged as groups (71) one behind the other and substantially in parallel with the longitudinal axis of the rotary tube (1), with projections (7) of adjacent groups (71) of projections (7) that are adjacent in the circumferential direction of the rotary tube (1) being offset relative to one another in the longitudinal direction of the rotary tube (1) such that spiral transport paths (S) for the material to be burned are formed in the preheating zone (3a).

2. The rotary kiln according to Claim 1,
**characterized in that**
the projections each contain a refractory material,
optionally the refractory material being concrete, in particular refractory concrete.

3. The rotary kiln according to Claims 1 or 2,
**characterized in that**
at least some of the projections (7) have a prismatic geometry, in particular the geometry of a trapezoidal prism, preferably an isosceles trapezoidal prism.

4. The rotary kiln according to any one of Claims 1 to 3,
**characterized in that**
at least some projections (7) have a height in the radial direction in relation to the rotary tube (1) of between 50 mm and 500 mm, preferably of between 100 mm and 300 mm, and particularly preferably of approx. 200 mm,
and/or at least some projections (7) have a length in the longitudinal direction of the rotary tube (1) of between 50 mm and 2000 mm, specifically of between 100 mm and 1000 mm, preferably of between 200 mm and 750 mm, and particularly preferably of between 350 mm and 450 mm,
and/or **in that** at least some projections (7) have a width perpendicular to the longitudinal direction of the rotary tube (1) of between 50 mm and 1000 mm, preferably of between 100 mm and 500 mm, and particularly preferably of between 150 mm and 300 mm.

5. The rotary kiln according to any one of Claims 3 to 4,
**characterized in that**
at least some projections (7) have the geometry of a trapezoidal prism, the width of the lower trapezoidal base being between 100 mm and 400 mm, preferably between 150 mm and 300 mm, and the width of the upper base being between 30 mm and 200 mm, preferably between 50 mm and 200 mm, and particularly preferably between 70 mm and 130 mm.

6. The rotary kiln according to any one of Claims 1 to 5,
**characterized in that**
the ratio between the length of a projection (7) in the longitudinal direction of the rotary tube (1) and the distance between two projections (7) adjacent in the longitudinal direction of the rotary tube (1) is between approx. 2:1 and 1:2, preferably between approx. 1.5:1 and 1:1.5, and particularly preferably is approx. 1:1.

7. The rotary kiln according to any one of Claims 1 to 6,
**characterized in that**
at least some of the projections (7) are fixed to the inner wall of the rotary tube (1) by means of a metallic anchorage, in particular a welded metallic anchorage.

8. The rotary kiln according to any one of Claims 1 to 7,
**characterized in that**
distributed across the circumference of the rotary tube (1), 3 to 9, especially 4 to 8, particularly preferably 5 to 7, and most preferably 6 groups (71) of projections (7) arranged one behind the other in the longitudinal direction are provided.

9. The rotary kiln according to any one of Claims 1 to 8,
**characterized in that**
the groups of projections (7) arranged one behind the other and substantially in parallel with the longitudinal axis of the rotary tube (1) extend across one fifth to one third of the total length of the rotary tube (1).

10. The rotary kiln according to any one of Claims 1 to 9,
**characterized in that**
at least one further projection (6), preferably a plurality of further projections (6), is provided in the inlet zone (2) of the rotary tube (1), the at least one further projection (6) having at least one sliding surface (6a) inclined to the longitudinal axis of the rotary tube (1) for conveying the material to be burned from the inlet zone (2) into the preheating zone (3a).

11. The rotary kiln according to Claim 10,
**characterized in that**
a plurality of further projections (6) is provided in the inlet zone (2) of the rotary tube (1), the further projections (6) being arranged in a row as a group (61) such that the respective sliding surfaces (6a) of the further projections form a common sliding surface (6a*) for the material to be burned.

12. The rotary kiln according to Claim 11,
**characterized in that**
the common sliding surface (6a*) formed by the plurality of further projections (6) extends substantially across the entire length of the inlet zone (2).

13. The rotary kiln according to any one of Claims 10 to 12,
**characterized in that**
the at least one sliding surface (6a) of the at least one further projection (6) has an inclination to the longitudinal axis of the rotary tube (1) of 15° to 70°, in particular of 25° to 65°, especially of 35° to 55°, and particularly preferably of 40° to 50°.

14. The rotary kiln according to any one of Claims 1 to 13,
**characterized in that**
a plurality of additional projections is provided in the region of the outlet zone (4), the additional projections (8) being arranged as groups (81) in the circumferential direction of the rotary tube (1), preferably offset from one another in the longitudinal direction of the rotary tube (1),
wherein, optionally, a plurality of groups (81) of additional projections (8) is provided in the longitudinal direction of the rotary tube (1).

15. A method for burning carbonate-containing material, in particular limestone or dolomite
**characterized by** the following steps:
- introducing the carbonate-containing material into the rotary tube (1) of a rotary kiln according to any one of Claims 1 to 14,
- burning the carbonate-containing material, the carbonate-containing material moving through the rotary tube from the inlet zone (2) through the preheating zone (3a) and the burning zone (3b) to the outlet zone (4), the rotary tube rotating in a direction of rotation (D),
- conveying the carbonate-containing material through the burning zone (3), the groups (71) of projections (7) that are arranged one behind the other and substantially in parallel with the longitudinal axis of the rotary tube (1) being arranged offset in relation to one another in the longitudinal direction of the rotary tube (1), and the rotational speed and inclination of the rotary tube (1) being adjusted such that the material is conveyed through the preheating zone (3a) on spiral transport paths (S).

## Revendications

1. Four tubulaire rotatif pour la calcination d'un produit contenant du carbonate, en particulier de calcaire ou de dolomite, comprenant un tube rotatif (1) comportant une extrémité d'entrée (2a) pour la fourniture du produit à calciner et une extrémité de sortie (4a) pour l'évacuation du produit calciné, et une unité formant brûleur (5) disposée dans la région de l'extrémité de sortie (4a), dans lequel le tube rotatif (1) présente, au niveau de son extrémité d'entrée (2a), une zone d'entrée (2) et présente, au niveau de son extrémité de sortie (4a), une zone de sortie (4), dans lequel une zone de préchauffage (3a) et une zone de calcination (3b) sont disposées entre la zone d'entrée (2) et la zone de sortie (4) dans le sens de transport du produit,
**caractérisé en ce que**
une pluralité de saillies (7) sont disposées dans la zone de préchauffage (3a) du tube rotatif (1), dans lequel les saillies (7) sont disposées les unes derrière les autres sous forme de groupes (71) sensiblement parallèlement à l'axe longitudinal du tube rotatif (1), dans lequel des saillies (7) de groupes (71) de saillies (7) adjacents, lesquelles saillies sont disposées de manière à être adjacentes dans la direction périphérique du tube rotatif (1), sont disposées de manière à être décalées les unes par rapport aux autres dans la direction longitudinale du tube rotatif (1), de telle sorte que des chemins de transport (S) en forme de spirale pour le produit à calciner sont formés dans la zone de préchauffage (3a).

2. Four tubulaire rotatif selon la revendication 1,
**caractérisé en ce que**
les saillies contiennent respectivement un matériau réfractaire,
dans lequel, éventuellement, le matériau réfractaire est du béton, en particulier du béton réfractaire.

3. Four tubulaire rotatif selon l'une des revendications 1 ou 2,
**caractérisé en ce que**
au moins certaines saillies (7) présentent une géométrie prismatique, en particulier la géométrie d'un prisme trapézoïdal, de préférence d'un prisme trapézoïdal isocèle.

4. Four tubulaire rotatif selon l'une des revendications 1 à 3,
**caractérisé en ce que**
au moins certaines saillies (7) présentent une hauteur dans la direction radiale par rapport au tube rotatif (1) comprise entre 50 mm et 500 mm, de préférence entre 100 mm et 300 mm et de manière particulièrement préférée d'environ 200 mm,
et/ou au moins certaines saillies (7) présentent une longueur dans la direction longitudinale du tube rotatif (1) comprise entre 50 mm et 2000 mm, de manière spécifique entre 100 mm et 1000 mm, de préférence entre 200 mm et 750 mm et de manière particulièrement préférée entre 350 mm et 450 mm,
**et/ou en ce qu'**au moins certaines saillies (7) présentent une largeur perpendiculairement à la direction longitudinale du tube rotatif (1) comprise entre 50 mm et 1000 mm, de préférence entre 100 mm et 500 mm et de manière particulièrement préférée entre 150 mm et 300 mm.

5. Four tubulaire rotatif selon l'une des revendications 3 à 4,
**caractérisé en ce que**
au moins certaines saillies (7) présentent la géométrie d'un prisme trapézoïdal, dans lequel la largeur de la base inférieure de trapèze se situe entre 100 mm et 400 mm, de préférence entre 150 mm et 300 mm, et la largeur de la base supérieure se situe entre 30 mm et 200 mm, de préférence entre 50 mm et 200 mm et de manière particulièrement préférée entre 70 mm et 130 mm.

6. Four tubulaire rotatif selon l'une des revendications 1 à 5,
**caractérisé en ce que**
le rapport entre la longueur d'une saillie (7) dans la direction longitudinale du tube rotatif (1) et la distance entre deux saillies (7) adjacentes dans la direction longitudinale du tube rotatif (1) se situe entre environ 2:1 et 1:2, de préférence entre environ 1,5:1 et 1:1,5, et est de manière particulièrement préférée d'environ 1:1.

7. Four tubulaire rotatif selon l'une des revendications 1 à 6,
**caractérisé en ce que**
au moins certaines des saillies (7) sont fixées à la paroi intérieure du tube rotatif (1) au moyen d'un ancrage métallique, en particulier d'un ancrage métallique soudé.

8. Four tubulaire rotatif selon l'une des revendications 1 à 7,
**caractérisé en ce que**
3 à 9, de manière spécifique 4 à 8, de manière particulièrement préférée 5 à 7, et de manière tout particulièrement préférée 6 groupes (71) de saillies (7) disposées les unes derrière les autres dans la direction longitudinale sont prévus, lesquels groupes sont répartis sur la périphérie du tube rotatif (1).

9. Four tubulaire rotatif selon l'une des revendications 1 à 8,
**caractérisé en ce que**
les groupes de saillies (7) disposées les unes derrière les autres sensiblement parallèlement à l'axe longitudinal du tube rotatif (1) s'étendent sur un cinquième jusqu'à un tiers de la longueur totale du tube rotatif (1).

10. Four tubulaire rotatif selon l'une des revendications 1 à 9,
**caractérisé en ce que**
dans la zone d'entrée (2) du tube rotatif (1) est prévue au moins une autre saillie (6), de préférence une pluralité d'autres saillies (6), dans lequel l'au moins une autre saillie (6) présente au moins une surface de glissement (6a) inclinée par rapport à l'axe longitudinal du tube rotatif (1) pour l'acheminement du produit à calciner depuis la zone d'entrée (2) dans la zone de préchauffage (3a).

11. Four tubulaire rotatif selon la revendication 10,
**caractérisé en ce que**
dans la zone d'entrée (2) du tube rotatif (1) sont prévues une pluralité d'autres saillies (6), dans lequel les autres saillies (6) sont disposées de manière à être alignées sous forme de groupe (61), de telle sorte que les surfaces de glissement (6a) respectives des autres saillies forment une surface de glissement commune (6a*) pour le produit à calciner.

12. Four tubulaire rotatif selon la revendication 11,
**caractérisé en ce que**
la surface de glissement commune (6a*) formée par la pluralité d'autres saillies (6) s'étend sensiblement sur toute la longueur de la zone d'entrée (2).

13. Four tubulaire rotatif selon l'une des revendications 10 à 12,
**caractérisé en ce que**
l'au moins une surface de glissement (6a) de l'au moins une autre saillie (6) présente une inclinaison par rapport à l'axe longitudinal du tube rotatif (1) allant de 15° à 70°, en particulier de 25° à 65°, de manière spécifique de 35° à 55° et de manière particulièrement préférée de 40° à 50°.

14. Four tubulaire rotatif selon l'une des revendications 1 à 13,
**caractérisé en ce que**
dans la région de la zone de sortie (4) sont prévues une pluralité de saillies supplémentaires, dans lequel les saillies supplémentaires (8) sont disposées en tant que groupes (81) dans la direction périphérique du tube rotatif (1), de préférence de manière à être décalées les unes par rapport aux autres dans la direction longitudinale du tube rotatif (1),
dans lequel, éventuellement, une pluralité de groupes (81) de saillies supplémentaires (8) sont prévus dans la direction longitudinale du tube rotatif (1).

15. Procédé permettant la calcination d'un produit contenant du carbonate, en particulier de calcaire ou de dolomite,
**caractérisé par** les étapes suivantes :
- introduction du produit contenant du carbonate dans le tube rotatif (1) d'un four tubulaire rotatif selon l'une des revendications 1 à 14,
- calcination du produit contenant du carbonate, dans lequel le produit contenant du carbonate se déplace à travers le tube rotatif depuis la zone d'entrée (2), à travers la zone de préchauffage (3a) et la zone de calcination (3b), jusqu'à la zone de sortie (4), dans lequel le tube rotatif tourne dans un sens de rotation (D),
- acheminement du produit contenant du carbonate à travers la zone de calcination (3), dans lequel les groupes (71) de saillies (7) disposées les unes derrière les autres sensiblement parallèlement à l'axe longitudinal du tube rotatif (1) sont disposés de manière à être décalés les uns par rapport aux autres dans la direction longitudinale du tube rotatif (1) et la vitesse de rotation et l'inclinaison du tube rotatif (1) sont adaptées de telle sorte que le produit est acheminé sur des chemins de transport (S) en forme de spirale à travers la zone de préchauffage (3a).
